# EUROPEAN PATENT APPLICATION

(11) **EP 4 844 449 A1**
(43) Date of publication of application: **25.11.2026**
(21) Application number: 26175019.4
(22) Date of filing: 28.04.2026
(51) Int. Cl.: G01S 19/21

(54) **DETECTING SPOOFING OF GLOBAL NAVIGATION SATELLITE SYSTEM (GNSS) SIGNALS**

(30) Priority: 23.05.2025 US 202519217471
(71) Applicant: Honeywell International Inc., Charlotte, NC 28202 (US)
(72) Inventor: HE, Hongxi, Charlotte, 28202 (US); CAO, Xiao, Charlotte, 28202 (US); YU, Siqin, Charlotte, 28202 (US)
(74) Representative: Haseltine Lake Kempner LLP

(57) **Abstract**

A system comprises circuitry configured to: determine authentic GNSS ephemeris or authentic GNSS almanac data by decoding GNSS signal at GNSS receiver or receiving authentic GNSS ephemeris or almanac data via datalink; receive GNSS signal at GNSS receiver; check authenticity of GNSS ephemeris or almanac data from each GNSS signal by comparing GNSS ephemeris or almanac data with authentic GNSS ephemeris or almanac data; determine GNSS satellites that should be currently visible to GNSS receiver based on current location of GNSS receiver and GNSS ephemeris and almanac data; determine respective range of expected signal strength for each of GNSS satellites that should be visible; and determine whether each respective GNSS signal of GNSS signal is spoofed by comparing aspects of each respective GNSS signal to GNSS satellites that should be visible and respective range of expected signal strength for each of GNSS satellites that should be visible.

## Description

### BACKGROUND

Global Navigation Satellite System (GNSS) receivers can receive signals from GNSS satellites to determine a position of GNSS receiver.

### SUMMARY

A system comprises circuitry configured to: determine at least one of authentic global navigation satellite system (GNSS) ephemeris data or authentic GNSS almanac data by at least one of decoding a GNSS signal at a GNSS receiver or receiving the at least one of the authentic GNSS ephemeris data or the authentic GNSS almanac data via datalink; receive at least one GNSS signal at the GNSS receiver; check authenticity of at least one of GNSS ephemeris data or GNSS almanac data from each of the at least one GNSS signal by comparing the at least one of the GNSS ephemeris data or the GNSS almanac data with the at least one of the authentic GNSS ephemeris data or the authentic GNSS almanac data; determine a set of GNSS satellites that should be currently visible to the GNSS receiver based on a current location of the GNSS receiver and the at least one of the GNSS ephemeris data or the GNSS almanac data; determine a respective range of an expected signal strength for each of the set of GNSS satellites that should be visible; and determine whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

A method for detecting spoofing of global navigation satellite system (GNSS) signals at a GNSS receiver comprises: determining at least one of authentic GNSS ephemeris data or authentic GNSS almanac data by at least one of decoding a GNSS signal at the GNSS receiver or receiving the at least one of the authentic GNSS ephemeris data or the authentic GNSS almanac data via datalink; receiving at least one GNSS signal at the GNSS receiver; checking authenticity of the at least one of the GNSS ephemeris data or the GNSS almanac data from each of the at least one GNSS signal by comparing the at least one of the GNSS ephemeris data or the GNSS almanac data with at least one of the authentic GNSS ephemeris data or the authentic GNSS almanac data; determining a set of GNSS satellites that should be currently visible to the GNSS receiver based on a current location of the GNSS receiver and the at least one of the GNSS ephemeris data or the GNSS almanac data; determining a respective range of an expected signal strength for each of the set of GNSS satellites that should be visible; and determining whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

A non-transitory computer-readable medium comprises a set of instructions that, when executed by at least one processor, cause the at least one processor to: determine at least one of authentic global navigation satellite system (GNSS) ephemeris data or authentic GNSS almanac data by at least one of decoding a GNSS signal at a GNSS receiver or receiving the at least one of the authentic GNSS ephemeris data or the authentic GNSS almanac data via datalink; receive at least one GNSS signal at the GNSS receiver; check authenticity of the at least one of the GNSS ephemeris data or the GNSS almanac data from each of the at least one GNSS signal by comparing the at least one of the GNSS ephemeris data or the GNSS almanac data with at least one of the authentic GNSS ephemeris data or the authentic GNSS almanac data; determine a set of GNSS satellites that should be currently visible to the GNSS receiver based on a current location of the GNSS receiver and the at least one of the GNSS ephemeris data or the GNSS almanac data; determine a respective range of an expected signal strength for each of the set of GNSS satellites that should be visible; and determine whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1B are block diagrams illustrating an example Global Navigation Satellite System (GNSS) system.
Figures 2A-2B are block diagrams illustrating example systems.
Figure 3 is a block diagram illustrating a functional block diagram for an example system for determining spoofing is present in global navigation satellite system (GNSS) signals
Figure 4 is a diagram showing an example lookup table with information regarding the expected visibility and carrier to noise ratio (C/NO) of signals received at a GNSS receiver for each GNSS satellite in a constellation at a particular time.
Figure 5 is an example method for determining spoofing is present in GNSS signals.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Global Navigation Satellite System (GNSS) receivers can receive signals from GNSS satellites to determine a position of the GNSS receiver. GNSS constellations (including Global Positioning System (GPS), GLONASS, Galileo, BeiDou, etc.) include a plurality of GNSS satellites (typically 10-30 or more satellites in a constellation) that transmit signals including information regarding position and time of transmission of the signals. Signals are received from a plurality of GNSS satellites at a GNSS receiver and the GNSS receiver calculates a GNSS solution (such as a Position-Velocity-Time (PVT) solution). In examples, the GNSS solution includes a position of the GNSS receiver and a GNSS clock offset.

Spoofing attacks cause GNSS receiver to compute an incorrect solution. In examples, spoofing can cause pilots (and others relying on GNSS) to have GNSS, avionics, and other systems relying on GNSS loosing signal or indicating incorrect position that may result in alarms being triggered. Spoofing may occur when a signal source is not authenticated. Spoofing creates an opportunity for an unbounded position error. In examples, it may not be possible to verify if the position solution is accurate to within even the loosest horizontal/vertical requirements.

While pilots and others are becoming more aware of spoofing, it is desirable to be able to provide an indication to pilots when spoofing is likely occurring. As spoofing attacks continue to grow in frequency, the aviation industry has great interest in anti-spoofing capability to protect high-value assets from attack worldwide. In examples, techniques can be used to detect and indicate to pilots when something is wrong in cases of spoofing. In examples, the inclusion of spoofing detection capability addresses concerns with potential false alerts, such as indications that the position estimate may be unsafe to use in the absence of any signal corruption. In examples, a safe exclusion capability will be preferable to maintain required accuracy, integrity, continuity and availability enroute and during approach for aerial (and other) vehicles.

In examples, a Position-Velocity-Time (PVT) solution is the primary result of processing GNSS measurements and is inherent in GNSS navigation solutions. In examples, the PVT solution solves for three dimensional position solution and a clock offset that is inherent in GNSS receivers because of imperfect clocks. In examples, GNSS receivers are built with relatively stable clocks that are not perfect and will have frequency errors so that each GNSS receiver's clock is running a bit fast or slow. In examples, the frequency errors are accounted for in GNSS PVT solution computations. In examples, the frequency error changes over time (generally slowly changing over time).

In examples, GNSS receivers have relatively stable clocks (with slowly varying frequency error) because the receiver tracking loops must be able to track clock error dynamics. In examples, relatively stable clocks are less expensive and are used in phones, cars, airplanes, etc. In examples, GNSS systems are designed with the use of GNSS receivers with relatively stable clocks that slowly drift. In examples, while the GNSS receivers relatively stable clocks do drift, the frequency error will not dramatically and abruptly jump (particularly under fairly consistent temperature conditions). In examples, the GNSS clock error grows proportional to the GNSS receiver clock frequency error. In examples, the growth rate also changes with changes in the frequency error. In examples, the GNSS clock error can be large and changing quickly.

In examples the position of the GNSS satellite can be predicted according to some information regarding the GNSS satellite. In examples, most GNSS satellites are not geostationary, so even a fixed location on the earth would receive GNSS signals from a changing list of GNSS satellites having different satellite identifications (IDs). In examples, the GNSS satellites from which a GNSS receiver receives GNSS signals vary based on the position of the GNSS satellites. In examples, Medium Earth Orbit (MEO) GNSS satellites vary in position in their orbits with approximately a 12-hour orbital period. In examples, other GNSS satellites, such as BeiDou Navigation Satellite System (BDS) Inclined Geosynchronous Orbit (IGSO) satellites and Geostationary Earth Orbit (GEO) satellites may have different orbital periods. In examples, the satellite IDs received at a fixed location will repeat approximately every 24 hours. In examples, the satellite IDs received from the GNSS satellites can be predicted hour to hour for known locations. In examples, this prediction can be calculated from the ephemeris and/or almanac data received from the GNSS satellites and checked against a position estimation from other airborne navigation systems.

In examples, the GNSS signal received by the GNSS receiver includes a parameter identifying the ratio between the carrier and the noise floor referred to as the carrier to noise ratio (C/NO). In examples, the carrier to noise ratio (C/NO) indicates the strength of the signal received by the GNSS receiver. In examples, if there is some GNSS spoofing device nearby, the signal label would be different than the normally received signal label from the GNSS satellites. In examples, this difference can be used to detect a spoofed GNSS signal. In examples, the strength of the GNSS signals are very weak at receiver antenna ports and should vary within a range. In examples, the carrier to noise ratio (C/NO) indicates strength of the carrier signal that can be detected by the GNSS receiver. In examples, spoofed GNSS signals from a GNSS spoofing device typically have a higher carrier to noise ratio (C/NO) than authentic GNSS signals from a GNSS satellite. In examples, a GNSS satellite is considered "visible" to a GNSS receiver when the GNSS receiver can received the GNSS signal from the GNSS satellite. In examples, the quantity of GNSS satellites visible to a GNSS receiver may depend on the specific GNSS constellation(s) being used. In examples using the Global Positioning System (GPS) constellation, the quantity of GNSS satellites visible to a GNSS receiver is approximately seven for most locations on the Earth. In examples using larger constellations such as Galileo (GAL), BeiDou Navigation Satellite System (BDS), GLONASS (GLO), etc., the quantity of GNSS satellites visible to a GNSS receiver is generally greater than twenty for most locations on the Earth. In examples, systems can be used to detect suspected spoofing signals/events so that the GNSS signals with suspected spoofing can be excluded so that the position calculation is still correct. In examples, systems may only require software changes without hardware modifications to implement this functionality. In example

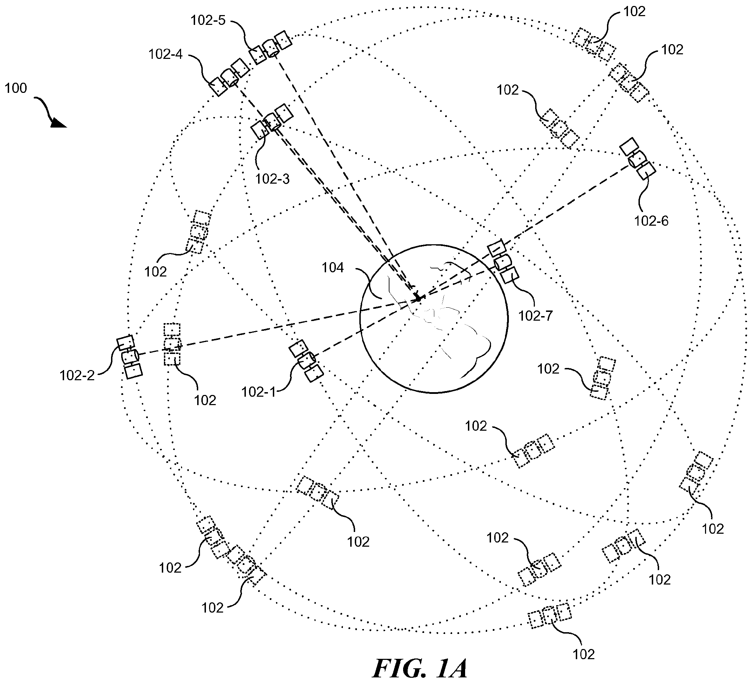

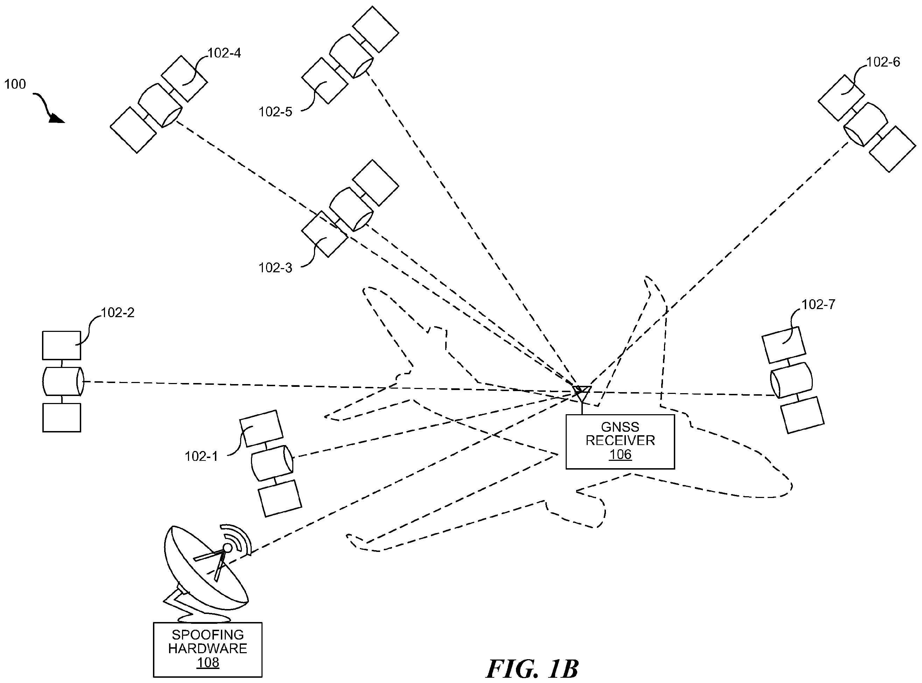

Figures 1A-1B are block diagrams illustrating components of a GNSS system 100. The GNSS system 100 includes a plurality of GNSS satellites 102 (including any combination of GNSS satellites 102 orbiting around the Earth 104 or some other celestial body) and at least one GNSS receiver 106 for determining position of a vehicle (such as an airborne, water borne, land based, or space vehicle), person, animal, or other moving object based on signals received from the plurality of GNSS satellites 102. In examples, a particular GNSS satellite 102 is visible to the GNSS receiver 106 when the current position of the particular GNSS satellite 102 relative to the GNSS receiver 106 allows the GNSS receiver 106 to receive GNSS signals from the particular GNSS satellite 102. In the examples show in Figures 1A-1B, a quantity of GNSS satellites 102 are visible from the GNSS satellites 102) to the GNSS receiver 106 (such as GNSS satellite 102-1, GNSS satellite 102-2, GNSS satellite 102-3, GNSS satellite 102-4, GNSS satellite 102-5, GNSS satellite 102-6, and GNSS satellite 102-7 shown in solid lines) while other GNSS satellites 102 are not visible to the GNSS receiver 106 (shown in dashed lines in Figure 1B).

In examples, GNSS spoofing hardware 108 provides a spoofed signal to the GNSS receiver 106. In examples, the GNSS spoofing hardware 108 receives GNSS signals from the GNSS satellites 102 and provides modified version(s) of the GNSS signals as the spoofed signal to the GNSS receiver. In examples, the GNSS receiver 106 is configured to receive a plurality of GNSS signals. While the GNSS receiver 106 is configured to receive GNSS signals from the plurality of GNSS satellites 102, the GNSS receiver 106 also inadvertently and undesirably receives spoofed GNSS signals from the GNSS spoofing hardware 108. In examples, the GNSS spoofing hardware 108 outputs the spoofed GNSS signal from a single antenna. In examples, the GNSS spoofing hardware 108 outputs the spoofed GNSS signal from a plurality of antennas.

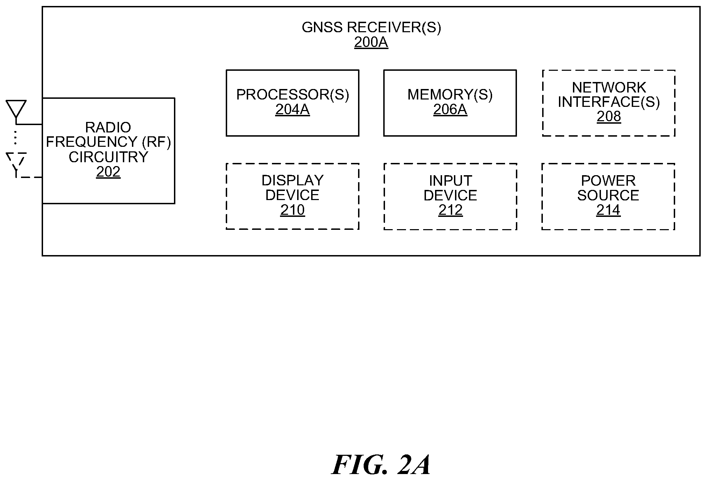

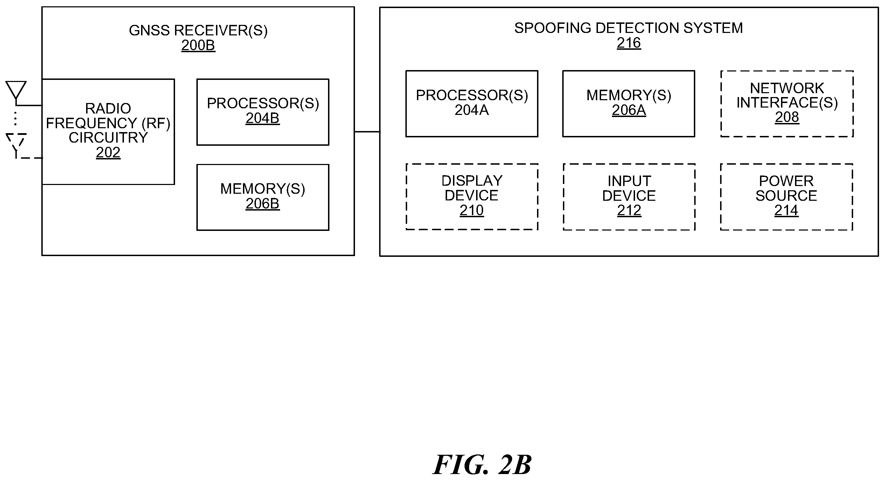

Figures 2A-2B are block diagrams illustrating systems. Figure 2A is block diagram illustrating at least one GNSS receiver 200A that includes spoofing detection functionality. In examples, GNSS receiver 200A implements the GNSS receiver 106. The at least one GNSS receiver 200A includes radio frequency (RF) circuitry 202, at least one processor 204A, at least one memory 206A, at least one optional network interface 208, at least one optional display device 210, at least one optional input device 212, and at least one optional power source 214. Figure 2B is a block diagram illustrating at least one GNSS receiver 200B and a separate at least one spoofing detection system 216. In examples, GNSS receiver 200A implements the GNSS receiver 106. The at least one GNSS receiver 200B includes the radio frequency (RF) circuitry 202, the at least one processor 204A, and the at least one memory 206A. The at least one spoofing detection system 216 includes at least one processor 204B, at least one memory 206B, the at least one optional network interface 208, the at least one optional display device 210, the at least one optional input device 212, and the at least one optional power source 214. In examples, the components of the at least one GNSS receiver 200A and the at least one GNSS receiver 200B can be implemented using any physical components and/or circuitry.

In examples, the radio frequency (RF) circuitry 202 includes or is coupled to any of antenna(s), preamplifier(s), mixer(s), band pass filter(s), other filter(s), code tracking loop(s), carrier tracking loop(s), channel(s), at least one GNSS receiver clock, etc. In examples, the RF circuitry 202 receives GNSS signals for a plurality of GNSS satellites and converts the GNSS signals from radio frequency (RF) signals into baseband digital signals. In examples, the RF circuitry 202: (1) filters and amplifies the RF signals; (2) down-converts the RF signals to baseband signals; (3) digitization from analog to digital signals using analog to digital converters (ADC); and/or (4) automatic gain control (AGC). In examples, the RF circuitry 202 includes at least one GNSS receiver clock. In examples, at least one GNSS receiver clock is external to the RF circuitry 202 within the at least one GNSS receiver 200A (having spoofing detection functionality) or the at least one GNSS receiver 200B. In examples, the at least one GNSS receiver clock includes a crystal oscillator such as a temperature compensated crystal oscillator (TCXO), an oven controlled crystal oscillator (OCXO), voltage controlled crystal oscillator (VCXO), and/or a clock oscillator (XO). In examples, the at least one GNSS receiver clock is used by other components within the GNSS receiver 200A (having the spoofing detection functionality) or the GNSS receiver 200B. In examples, the at least one GNSS receiver clock is used to provide timing information for GNSS solutions. In examples, the at least one GNSS receiver clock is used to generate a clock used by the RF circuitry 202 for down-converting RF signals to baseband signals.

The at least one processor 204A and/or the at least one processor 204B can be any known processor, such as a general purpose processor (GPP) or special purpose (such as a field-programmable gate array (FPGA), application-specific integrated circuit (ASIC) or other integrated circuit or circuitry), any programmable logic device, or any circuitry. In examples, the at least one memory 206A and/or the at least one memory 206B can be any device, mechanism, or populated data structure used for storing information. In examples, the at least one memory 206A and/or the at least one memory 206B can be or include any type of volatile memory, nonvolatile memory, and/or dynamic memory. In examples, the at least one memory 206A and/or the at least one memory 206B can be random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs) and/or the like. In accordance with some embodiments, the at least one memory 206A and/or the at least one memory 206B may include one or more disk drives, flash drives, one or more databases, one or more tables, one or more files, local cache memories, processor cache memories, relational databases, flat databases, and/or the like. In addition, those of ordinary skill in the art will appreciate many additional devices and techniques for storing information, which can be used as the at least one memory 206A and/or the at least one memory 206B. The at least one memory 206A and/or the at least one memory 206B may be used to store instructions for running one or more applications or modules on the at least one processor 204A and/or the at least one processor 204B. In examples, the at least one memory 206A and/or the at least one memory 206B could be used in one or more examples to house all or some of the instructions needed to execute the functionality discussed herein.

In examples, the at least one optional network interface 208 includes or is coupled to at least one optional antenna for communication with a network. In examples, the at least one optional network interface 208 includes at least one of an Ethernet interface, a cellular radio access technology (RAT) radio, a Wi-Fi radio, a Bluetooth radio, or a near field communication (NFC) radio. In examples, the at least one optional network interface 208 includes a cellular radio access technology radio configured to establish a cellular data connection (mobile Internet) of sufficient speeds with a remote server using a local area network (LAN) or a wide area network (WAN). In examples, the cellular radio access technology includes at least one of third generation (3G), fourth generation (4G), fifth generation (5G), etc. or other appropriate communication services or a combination thereof. In examples, the at least one optional network interface 208 includes a Wi-Fi (IEEE 802.11) radio configured to communicate with a wireless local area network. In examples, the at least one optional network interface 208 includes a near field radio communication device that is limited to close proximity communication, such as a passive near field communication (NFC) tag, an active near field communication (NFC) tag, a passive radio frequency identification (RFID) tag, an active radio frequency identification (RFID) tag, a proximity card, or other personal area network device.

In examples, the at least one optional display device 210 includes at least one of light emitting diode (LED), liquid crystal display (LCD), light emitting diode (LED) display, organic light emitting diode (OLED) display, MicroLED, or e-ink display. In examples, the at least one optional input device 212 includes at least one of a touchscreen (including capacitive and resistive touchscreens), a stylus, a touchpad, a capacitive button, a mechanical button, a switch, a dial, a keyboard, a mouse, a camera, a biometric sensor/scanner, a microphone, etc. In examples, the at least one optional display device 210 is combined with the at least one optional input device 212 into a human machine interface (HMI) for user interaction with the system(s) 100. In examples, the at least one optional power source 214 is used to provide power to the various components of the computing system(s) 100.

In examples, the at least one GNSS receiver(s) 200A and/or the at least one GNSS receiver(s) 200B determines GNSS measurements based on GNSS signals. In examples, the GNSS signals are received from the plurality of GNSS satellites 102 (desired) and/or the GNSS spoofing hardware 108 (undesired). In examples, the GNSS signals received include pseudorange. In examples, the at least one GNSS receiver(s) 200A and/or the at least one GNSS receiver(s) 200B determine GNSS measurements based on the GNSS signals. In examples, the at least one GNSS receiver(s) 200A and/or the at least one GNSS receiver(s) 200B compute the Position-Velocity-Time (PVT) solution including the clock offset (T). In examples, the at least one GNSS receiver(s) 200A and/or the at least one GNSS receiver(s) 200B compute three-dimensional position (including latitude, longitude, and altitude; or X, Y, and Z coordinates) and the GNSS clock offset (T). In examples, the at least one GNSS receiver(s) 200A and/or the at least one GNSS receiver(s) 200B also compute velocity or other data. In examples, the GNSS receiver(s) 200 compute the GNSS clock offset at the same time and with the same equations as position.

In examples, the spoofed GNSS signal is a signal that spoofing multiple GNSS satellite signals at once (such as all visible GNSS signals). In examples, the GNSS spoofing hardware may receive all the GNSS signals that are available at that particular location and regenerate them in some fashion. In examples, the spoofed GNSS signals may be generated by repeating modified versions of the GPS signals received at the GNSS spoofing hardware.

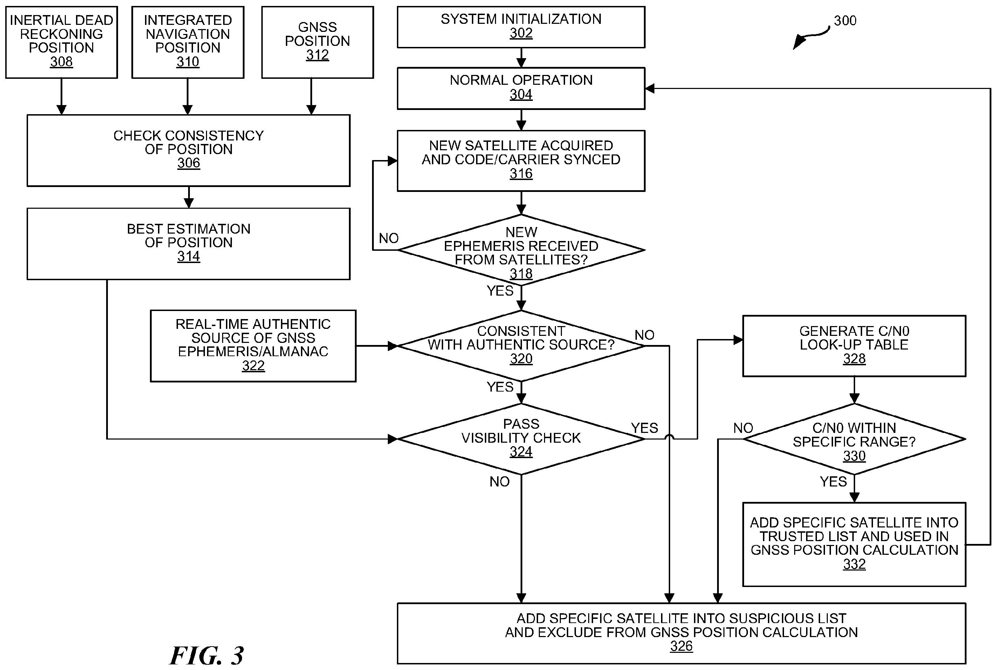

Figure 3 is a block diagram illustrating a functional block diagram for an example system 300 for determining spoofing is present in global navigation satellite system (GNSS) signals. In examples, the system 300 can be implemented using circuitry and components of any of systems 2A-2B. In examples, system 300 performs system initialization at block 302. In examples, system 300 performs normal operation at block 304. In examples, the consistency of the position is checked at block 306. In examples, the consistency of the position is checked at block 306 based on inertial dead reckoning position 308 (such as from an Inertial Reference System (IRS)), integrated navigation position 310, and/or GNSS position 312 (any of which can be received from an aircraft's own system(s)). In examples, a best estimation of the position 314 of the aircraft is determined based on the inertial dead reckoning position 308 (such as from an Inertial Reference System (IRS)), the integrated navigation position 310, and/or the GNSS position 312 (any of which can be received from an aircraft's own system(s)).

In examples, a new satellite is acquired and code/carrier synced at block 316. In examples, this acquisition and code/carrier syncing at block 316 may include receiving a signal of a GNSS satellite and decoding the message modulated into the GNSS signal to obtain the GNSS frame message (including the ephemeris and almanac). In examples, if it is not determined that a new ephemeris is received from the satellites at block 318, the system waits until a new satellite is acquired and a code/carrier synced at block 316.

In examples, if it is determined that a new ephemeris is received from satellites at block 318, it is then determined at block 320 whether the new ephemeris received from the satellites is consistent with an authentic source of GNSS ephemeris and/or almanac data received real-time from block 322. In examples, it is determined at block 320 whether the new ephemeris received is consistent with an authentic source of GNSS ephemeris and/or almanac data received real-time from block 322 by comparing the ephemeris and almanac derived from the GNSS satellite with the existing authentic ephemeris to check if they are consistent. In examples, the authentic source of GNSS ephemeris and/or almanac data received real-time from block 322 comes from a real-time sending source of the GNSS ephemeris/almanac data and can be used to derive a good estimation of the position of the satellites in real-time. In examples, before takeoff from an airport, aircraft can receive real time ephemeris data from the authentic source of GNSS ephemeris and/or almanac data from a source other than the GNSS satellites themselves. In examples where authentic ephemeris is available by network from an authentic source, spoofing can be detected at startup of the GNSS receiver by comparing the ephemeris data from the authentic source with the ephemeris data received in the GNSS signal(s). In examples, during flight, if the aircraft cannot receive the real time ephemeris data from the authentic source other than the GNSS satellites themselves, it can still use the previous ephemeris for some amount of time (such as a few hours). In examples, the aircraft can have an authentic ephemeris and very good accuracy position of aircraft. In examples, if it is not determined that the new ephemeris is received from the satellites is consistent with the authentic source of GNSS ephemeris data, the specific satellite is added into a suspicious list and excluded from GNSS position calculation(s) at block 326.

In examples, if it is determined that the new ephemeris received from the satellites is consistent with the authentic source of GNSS ephemeris data, it is determined whether the specific satellite passes a visibility check at block 324. In examples, the visibility check at block 324 checks to see whether the specific satellite is currently supposed to be visible, meaning whether a specific signal corresponding to the specific satellite should be received based on the expected position of the satellites relative to the GNSS receiver. In examples, the expected distance and orientation of the satellites relative to the GNSS receiver can be determined based on the ephemeris data. In examples, the expected distance and orientation of each satellite relative to the GNSS receiver can be used to determine whether each particular GNSS satellite should currently be visible to the GNSS receiver. In examples, whether each particular GNSS satellite should currently be visible to the GNSS receiver is stored in a lookup table. In examples, if it is determined at block 324 that the specific satellite does not pass the visibility check (because it is not supposed to be currently visible), the specific satellite is added into the suspicious list and excluded from GNSS position calculation(s) at block 326.

In examples, if it is determined that the specific satellite passes the visibility check (because it is supposed to be currently visible), a carrier to noise (C/NO) lookup table is generated at block 328 and a determination is made whether the carrier to noise (C/NO) ratio is within a specific range at block 330. In examples, various factors can be used to determine the expected range of the carrier to noise (C/NO) ratio, including: (1) the signal power broadcast from the satellites (which is generally published for satellites); (2) the distance from the satellite to the aircraft; (3) the impact of the hardware link loops, the antenna gain, and the real time antenna attitude impact. In examples, a reasonable range for carrier to noise (C/NO) ratio.

In examples, a carrier to noise (C/NO) lookup table is generated based on the expected carrier signal strength (C) divided by the expected noise floor (N0) for each GNSS satellite. In examples, the expected carrier signal strength (C) and the expected noise floor (N0) for each satellite may be determined based on the transformation power and the antenna gain and the elevation angle from the GNSS satellites to the antenna(s) of the GNSS receiver. If it is not determined that the carrier to noise (C/NO) is within the specific range at block 330, the specific satellite is added into the suspicious list and excluded from GNSS position calculation(s) at block 326. If it is determined that the carrier to noise (C/NO) is within the specific range at block 330, the specific satellite is added into a trusted list and used in the GNSS position calculation(s) at block 332. In examples, the system 300 proceeds with normal operation at block 304 until a new satellite is acquired and code/carrier synced at block 316.

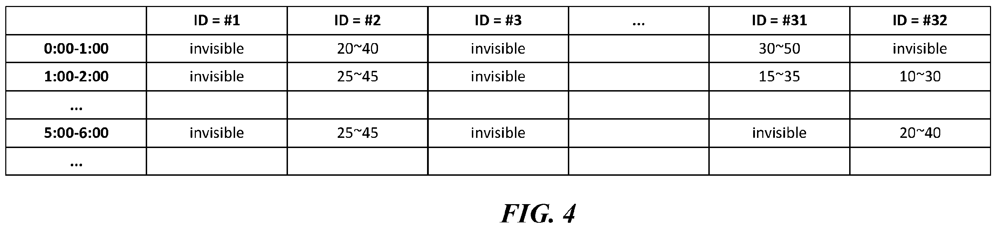

Figure 4 is a diagram showing an example lookup table with information regarding the expected visibility and carrier to noise ratio (C/NO) of signals received at a GNSS receiver (such as GNSS receiver 106) for each GNSS satellite (such as GNSS satellites 102) in the constellation at a particular time. In examples, the rows identify the different hour time periods and the columns identify the different GNSS satellites by an ID number. For each satellite at each time period, the table indicates whether the satellite is expected to be "invisible" or what the carrier to noise ratio (C/NO) for the satellite is expected to be during the particular time period. The lookup table in Figure 4 is not complete and only shows some of the time periods and some of the satellites (by ID number), but it is understood that the table could include the estimates for all of the satellites at all of the time periods.

In the example shown in Figure 4, at the first time block between 0:00-1:00: (1) satellite with ID #1 is invisible (potentially because it is on the other side of the Earth); (2) satellite with ID #2 is visible because it can be received and the range in the table represents normal value around this range; (3) satellite with ID #3 is also invisible (potentially because it is on the other side of the Earth); (4) satellite with ID #31 is visible because it can be received and the range in the table represents normal value around this range; and (5) satellite with ID #32 is also invisible (potentially because it is on the other side of the Earth). In the example shown in Figure 4, at the second time block between 1:00-2:00 the visibility and ranges change, including that satellite with ID #32 becomes visible and the range in the table represents normal value around this range. In the example shown in Figure 4, at the sixth time block between 5:00-6:00 the visibility and ranges change again, including that satellite with ID #31 becomes invisible (potentially because it moves to the other side of the Earth).

In examples, based on the time and expected location of the GNSS receiver, it is understood where the GNSS satellites in the constellation should be based on the GNSS almanac and/or GNSS ephemeris data. In examples, based on the GNSS almanac and/or GNSS ephemeris data, it is predicted where the GNSS signal for each GNSS satellite will be coming from and which GNSS satellites should be expected to be received during a particular aircraft flight. In example aircraft flight, the planned route is known and the approximate locations of the GNSS receiver at different times during the flight is thusly known. In examples, the lookup table can be created based on the predicted and collected carrier to noise ratio (C/NO) data. In examples, the carrier to noise (C/NO) data includes the GNSS SIS report, airborne hardware link loss, antenna gain, and/or real-time attitude impact, etc.

In examples, a lookup table is generated for a known flight based on prediction, visibility check, and collected carrier to noise (C/NO) data of normal flights. In examples, lookup table(s) are generated based on the departure and landing of the aircraft and the planned flight path. In examples, the position calculation algorithms are updated with the lookup table. In examples, any ID or strength that is outside of the table can be considered a spoofing signal and can be excluded from the position calculation. In examples, more than a threshold (such as three) abnormal IDs are detected at the same time, but valid IDs are greater than a threshold (such as five, which is generally one more for integrity than necessary to calculate the three dimensional position and clock offset), then a suspected spoofing detected warning may be shown to crew and the abnormal data may be recorded for further analysis. In examples, if the valid IDs are less than a threshold (such as five), there is not enough signal for position calculation, or a jamming is happening, then an "invalid GPS" alert is shown to the crew. In examples, the indication is at least one of a visual indication, an audible indication, or a tactile indication.

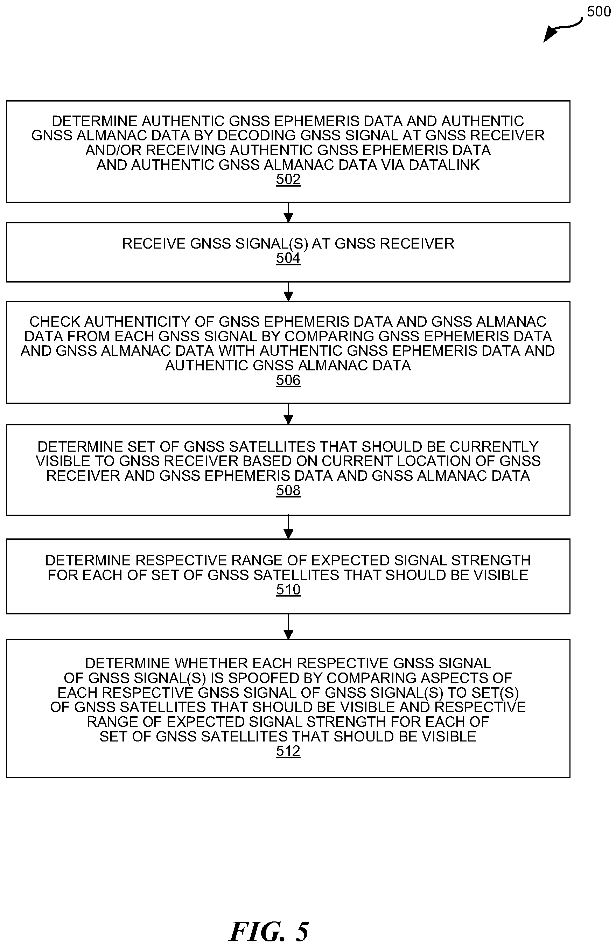

Figure 5 is an example method 500 for determining spoofing is present in global navigation satellite system (GNSS) signals. In examples, the example method 500 is executed using any of system 100, GNSS receiver(s) 200A (having the spoofing detection functionality), or the at least one spoofing detection system 216 described above. In examples, method 500 begins at block 502 with determining authentic GNSS ephemeris data and authentic GNSS almanac data by decoding a GNSS signal at a GNSS receiver and/or receiving the authentic GNSS ephemeris data and authentic GNSS almanac data via datalink. In examples, GNSS ephemeris data includes clock errors in the GNSS satellite and orbit parameters. In examples, the orbit parameters are parameters used to describe the trajectory, period, etc. of the GNSS satellites orbits. In examples, methods can be used to calculate the positions of each GNSS satellite at a particular time based on the orbit parameters. In examples, the positions of each GNSS satellite at a particular time is the ephemeris.

In examples, each GNSS satellite broadcasts its own ID and ephemeris modulated in the GNSS signal. In examples, the GNSS receiver can receive the authentic source of GNSS data from a different source than directly from the GNSS satellites (such as from a third party datalink or integrity monitory system that distributes authentic ephemeris to aircraft). In examples where a different source of GNSS data is not available, the GNSS signal before takeoff of the aircraft is generally clean and can be used as a good GNSS satellite baseline. In examples, a specific authentic ephemeris is received for each visible GNSS satellite and then during flight, new ephemeris is received for new satellites. In examples, because the aircraft and satellites are in dynamic motion, the ephemeris of the GNSS signals are double checked for consistency. In examples, the ephemeris will maintain consistency for at least several hours.

In examples, the almanac is rough orbit information and is not as accurate as the ephemeris. In examples, the satellite ephemeris data is more precise and updated more frequently, but may only have validity for a couple or a few hours and is usually refreshed every one, two, or few hours. In examples, the almanac includes all the satellites orbit information and is usually valid for about 180 days (about six month), but can be used beyond this period as it contains orbital information that changes gradually. In examples, the almanac is broadcast by each satellite, but can include rough orbit information for all the satellites. In examples, the almanac is used for satellite forecast by forecasting visible satellites based on the position and time of a GNSS receiver.

In examples, method 500 proceeds to block 504 with receiving GNSS signal(s) at the GNSS receiver. In examples, method 500 proceeds to block 506 with checking the authenticity of the GNSS ephemeris data and the GNSS almanac data from each GNSS signal by comparing the GNSS ephemeris data and the GNSS almanac data with authentic GNSS ephemeris data with the authentic GNSS ephemeris data and the authentic GNSS almanac data. In examples, the authentic GNSS ephemeris data and authentic GNSS almanac data is received from an independent source from the GNSS satellites themselves (such as through a SATCOM link from a ground station) or is from baseline data collected before flight. In examples, the authentic GNSS ephemeris data and authentic GNSS almanac data are used to compare against the data from the new GNSS signals to determine whether the GNSS signals come from actual GNSS satellites or are spoofed GNSS signals.

In examples, specific methods are used to compare the ephemeris of the authentic GNSS ephemeris data and the GNSS ephemeris data received in a GNSS signals. In examples, at least one parameter of the authentic GNSS ephemeris data is directly compared to at least one corresponding parameter of the GNSS ephemeris data received in the GNSS signals. In examples, all the parameters of the authentic GNSS ephemeris data are directly compared to all the parameters of the GNSS ephemeris data received in the GNSS signals. In examples, if there is a difference between any of the parameters, this could be indicative of spoofing.

In examples, methods can be used to compare and calculate consistency between the authentic GNSS ephemeris data and the GNSS ephemeris data received in the GNSS signals. In examples, real time trajectories of the satellites based on the received GNSS signal can be calculated based on the parameters and the real time trajectories can be checked against limits on the trajectory to determine if the real time trajectories of the satellites based on the received GNSS signal are within acceptable limits. In examples, if the real time trajectories of the satellites based on the received GNSS signal are not within acceptable limits, the received GNSS signal can be rejected as a spoofed signal. In examples, spoofing may be able to be detected if there is inconsistency in an expected drift of the trajectory or clock errors. In examples, a Satellite-Based Augmentation System (SBAS) is used to provide signals to GNSS receivers to improve integrity and/or enhance accuracy and reliability of GNSS (Global Navigation Satellite System) signals by providing corrections and integrity information.

In examples, method 500 proceeds to block 508 with determining a set of GNSS satellites that should be currently visible to the GNSS receiver based on the currently location of the GNSS receiver and the GNSS ephemeris data and the GNSS almanac data. In examples, based on the position of the GNSS receiver and the expected position of each GNSS satellite (based on the GNSS almanac and/or GNSS ephemeris data), the elevation angles to the GNSS satellite can be determined and elevation angles below a certain angle (such as zero) would generally not be determined as visible as the Earth would be blocking them. Accordingly, if a GNSS signal is received for a GNSS satellite that should not be visible because it is expected to be blocked from the Earth, then that GNSS signal will be identified as likely being spoofed.

In examples, method 500 proceeds to block 510 with determining the respective range of the expected signal strength for each of the of the GNSS satellites that should be visible. In examples, evidence of spoofing is identified if the signal strength is outside of the respective range of the expected signal strength, such as if the carrier to noise ratio (C/NO) is higher than a respective range of the expected carrier to noise ratio (C/NO). In examples, it is typical that a spoofed GNSS signal will have a higher signal strength and/or higher carrier to noise ratio (C/NO) than an authentic GNSS signal because the higher signal strength and/or higher carrier to noise ratio (C/NO) causes GNSS receivers to recapture the higher signal strength and/or higher carrier to noise ratio (C/NO) signals.

In examples, method 500 proceeds to block 512 with determining whether each respective GNSS signal of the GNSS signal(s) is spoofed by comparing aspects of each respective GNSS signals of the GNSS signal(s) to set(s) of GNSS satellites that should be visible and the respective range of the expected signal strength for each of the set of GNSS satellites that should be visible. In examples, if evidence of spoofing is identified, a spoofing flag can be set and/or the data from the potentially spoofed GNSS signal can be eliminated from the position calculation.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium (such as a non-transitory computer-readable medium) tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions (such as a non-transitory computer-readable medium) and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magnetooptical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), any programmable logic device, and/or any other circuitry.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a system comprising: circuitry configured to: determine at least one of authentic global navigation satellite system (GNSS) ephemeris data or authentic GNSS almanac data by at least one of decoding a GNSS signal at a GNSS receiver or receiving the at least one of the authentic GNSS ephemeris data or the authentic GNSS almanac data via datalink; receive at least one GNSS signal at the GNSS receiver; check authenticity of at least one of GNSS ephemeris data or GNSS almanac data from each of the at least one GNSS signal by comparing the at least one of the GNSS ephemeris data or the GNSS almanac data with the at least one of the authentic GNSS ephemeris data or the authentic GNSS almanac data; determine a set of GNSS satellites that should be currently visible to the GNSS receiver based on a current location of the GNSS receiver and the at least one of the GNSS ephemeris data or the GNSS almanac data; determine a respective range of an expected signal strength for each of the set of GNSS satellites that should be visible; and determine whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

Example 2 includes the system of Example 1, wherein comparing the at least one of the GNSS ephemeris data or the GNSS almanac data with the at least one of the authentic GNSS ephemeris data or the authentic GNSS almanac data comprises: directly comparing at least a first parameter of the at least one of the GNSS ephemeris data or the GNSS almanac data with at least a second parameter of the at least one of the authentic GNSS ephemeris data or the authentic GNSS almanac data.

Example 3 includes the system of any of Examples 1-2, wherein the set of GNSS satellites that should be currently visible to the GNSS receiver is determined at least in part by: determining elevation angles between each GNSS satellite of the set of GNSS satellites and the GNSS receiver; and determining that a subset of the set of GNSS satellites with elevation angles above a certain angle are visible.

Example 4 includes the system of any of Examples 1-3, wherein the expected signal strength is represented by an expected carrier to noise ratio (C/NO).

Example 5 includes the system of any of Examples 1-4, wherein the at least one GNSS signal is received from GNSS spoofing hardware instead of from GNSS satellites.

Example 6 includes the system of any of Examples 1-5, wherein the system comprises at least one GNSS receiver having the circuitry.

Example 7 includes the system of any of Examples 1-6, wherein the circuitry comprises: the at least one GNSS receiver having a first portion of the circuitry configured to: receive the at least one GNSS signal at the GNSS receiver; and at least one spoofing detection system having a second portion of the circuitry configured to: determine the at least one of the authentic GNSS ephemeris data or the authentic GNSS almanac data by at least one of decoding the GNSS signal at the GNSS receiver or receiving the at least one of the authentic GNSS ephemeris data or the authentic GNSS almanac data via the datalink; check authenticity of the at least one of the GNSS ephemeris data or the GNSS almanac data from each of the at least one GNSS signal by comparing the at least one of the GNSS ephemeris data or the GNSS almanac data with the at least one of the authentic GNSS ephemeris data or the authentic GNSS almanac data; determine the set of GNSS satellites that should be currently visible to the GNSS receiver based on the current location of the GNSS receiver and the at least one of the GNSS ephemeris data or the GNSS almanac data; determine the respective range of the expected signal strength for each of the set of GNSS satellites that should be visible; and determine whether each respective GNSS signal of the at least one GNSS signal is spoofed by comparing the aspects of each respective GNSS signal of the at least one GNSS signal to the at least one of the set of GNSS satellites that should be visible and the respective range of the expected signal strength for each of the set of GNSS satellites that should be visible.

Example 8 includes the system of any of Examples 1-7, wherein the circuitry is further configured to: provide at least one of an alarm condition, a visual indication, an audible indication, or a tactile indication when spoofing is present.

Example 9 includes a method for detecting spoofing of global navigation satellite system (GNSS) signals at a GNSS receiver, comprising: determining at least one of authentic GNSS ephemeris data or authentic GNSS almanac data by at least one of decoding a GNSS signal at the GNSS receiver or receiving the at least one of the authentic GNSS ephemeris data or the authentic GNSS almanac data via datalink; receiving at least one GNSS signal at the GNSS receiver; checking authenticity of the at least one of the GNSS ephemeris data or the GNSS almanac data from each of the at least one GNSS signal by comparing the at least one of the GNSS ephemeris data or the GNSS almanac data with at least one of the authentic GNSS ephemeris data or the authentic GNSS almanac data; determining a set of GNSS satellites that should be currently visible to the GNSS receiver based on a current location of the GNSS receiver and the at least one of the GNSS ephemeris data or the GNSS almanac data; determining a respective range of an expected signal strength for each of the set of GNSS satellites that should be visible; and determining whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

Example 10 includes the method of Example 9, wherein comparing the at least one of the GNSS ephemeris data or the GNSS almanac data with the at least one of the authentic GNSS ephemeris data or the authentic GNSS almanac data comprises: directly comparing at least a first parameter of the at least one of the GNSS ephemeris data or the GNSS almanac data with at least a second parameter of the at least one of the authentic GNSS ephemeris data or the authentic GNSS almanac data.

Example 11 includes the method of any of Examples 9-10, wherein the set of GNSS satellites that should be currently visible to the GNSS receiver is determined at least in part by: determining elevation angles between each GNSS satellite of the set of GNSS satellites and the GNSS receiver; and determining that a subset of the set of GNSS satellites with elevation angles above a certain angle are visible.

Example 12 includes the method of any of Examples 9-11, wherein the expected signal strength is represented by an expected carrier to noise ratio (C/NO).

Example 13 includes the method of any of Examples 9-12, wherein the at least one GNSS signal is received from GNSS spoofing hardware instead of from GNSS satellites.

Example 14 includes the method of any of Examples 9-13, further comprising: determining, at at least one spoofing detection system, the at least one of the authentic GNSS ephemeris data or the authentic GNSS almanac data by at least one of decoding the GNSS signal at the GNSS receiver or receiving the at least one of the authentic GNSS ephemeris data or the authentic GNSS almanac data via datalink; receiving, at the at least one GNSS receiver, the at least one GNSS signal; checking, at the at least one spoofing detection system, the authenticity of the at least one of GNSS ephemeris data or GNSS almanac data from each of the at least one GNSS signal by comparing the at least one of the GNSS ephemeris data or the GNSS almanac data with the at least one of the authentic GNSS ephemeris data or the authentic GNSS almanac data; determining, at the at least one spoofing detection system, the set of GNSS satellites that should be currently visible to the GNSS receiver based on the current location of the GNSS receiver and the at least one of the GNSS ephemeris data or the GNSS almanac data; determining, at the at least one spoofing detection system, the respective range of the expected signal strength for each of the set of GNSS satellites that should be visible; and determining, at the at least one spoofing detection system, whether each respective GNSS signal of the at least one GNSS signal is spoofed by comparing the aspects of each respective GNSS signal of the at least one GNSS signal to the at least one of the set of GNSS satellites that should be visible and the respective range of the expected signal strength for each of the set of GNSS satellites that should be visible.

Example 15 includes the method of any of Examples 9-14, further comprising: providing at least one of an alarm condition, a visual indication, an audible indication, or a tactile indication when spoofing is present.

Example 16 includes a non-transitory computer-readable medium comprising a set of instructions that, when executed by at least one processor, cause the at least one processor to: determine at least one of authentic global navigation satellite system (GNSS) ephemeris data or authentic GNSS almanac data by at least one of decoding a GNSS signal at a GNSS receiver or receiving the at least one of the authentic GNSS ephemeris data or the authentic GNSS almanac data via datalink; receive at least one GNSS signal at the GNSS receiver; check authenticity of the at least one of the GNSS ephemeris data or the GNSS almanac data from each of the at least one GNSS signal by comparing the at least one of the GNSS ephemeris data or the GNSS almanac data with at least one of the authentic GNSS ephemeris data or the authentic GNSS almanac data; determine a set of GNSS satellites that should be currently visible to the GNSS receiver based on a current location of the GNSS receiver and the at least one of the GNSS ephemeris data or the GNSS almanac data; determine a respective range of an expected signal strength for each of the set of GNSS satellites that should be visible; and determine whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

Example 17 includes the non-transitory computer-readable medium of Example 16, wherein comparing the at least one of the GNSS ephemeris data or the GNSS almanac data with the at least one of the authentic GNSS ephemeris data or the authentic GNSS almanac data comprises: directly comparing at least a first parameter of the at least one of the GNSS ephemeris data or the GNSS almanac data with at least a second parameter of the at least one of the authentic GNSS ephemeris data or the authentic GNSS almanac data.

Example 18 includes the non-transitory computer-readable medium of any of Examples 16-17, wherein the expected signal strength is represented by an expected carrier to noise ratio (C/NO).

Example 19 includes the non-transitory computer-readable medium of any of Examples 16-18, wherein the at least one GNSS signal is received from GNSS spoofing hardware instead of from GNSS satellites.

Example 20 includes the non-transitory computer-readable medium of any of Examples 16-19, wherein the set of instructions, when executed by the at least one processor, further causes the at least one processor to: provide at least one of an alarm condition, a visual indication, an audible indication, or a tactile indication when spoofing is present.

## Claims

1. A system comprising:
circuitry configured to:
determine at least one of authentic global navigation satellite system (GNSS) ephemeris data or authentic GNSS almanac data by at least one of decoding a GNSS signal at a GNSS receiver or receiving the at least one of the authentic GNSS ephemeris data or the authentic GNSS almanac data via datalink;
receive at least one GNSS signal at the GNSS receiver;
check authenticity of at least one of GNSS ephemeris data or GNSS almanac data from each of the at least one GNSS signal by comparing the at least one of the GNSS ephemeris data or the GNSS almanac data with the at least one of the authentic GNSS ephemeris data or the authentic GNSS almanac data;
determine a set of GNSS satellites that should be currently visible to the GNSS receiver based on a current location of the GNSS receiver and the at least one of the GNSS ephemeris data or the GNSS almanac data;
determine a respective range of an expected signal strength for each of the set of GNSS satellites that should be visible; and
determine whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

2. The system of claim 1, wherein comparing the at least one of the GNSS ephemeris data or the GNSS almanac data with the at least one of the authentic GNSS ephemeris data or the authentic GNSS almanac data comprises:
directly comparing at least a first parameter of the at least one of the GNSS ephemeris data or the GNSS almanac data with at least a second parameter of the at least one of the authentic GNSS ephemeris data or the authentic GNSS almanac data.

3. The system of claim 1, wherein the set of GNSS satellites that should be currently visible to the GNSS receiver is determined at least in part by:
determining elevation angles between each GNSS satellite of the set of GNSS satellites and the GNSS receiver; and
determining that a subset of the set of GNSS satellites with elevation angles above a certain angle are visible.

4. The system of claim 1, wherein the expected signal strength is represented by an expected carrier to noise ratio (C/NO).

5. The system of claim 1, wherein the at least one GNSS signal is received from GNSS spoofing hardware instead of from GNSS satellites.

6. The system of claim 1, further comprising:
wherein the system comprises at least one GNSS receiver having the circuitry;
wherein the circuitry comprises:
the at least one GNSS receiver having a first portion of the circuitry configured to:
receive the at least one GNSS signal at the GNSS receiver; and
at least one spoofing detection system having a second portion of the circuitry configured to:
determine the at least one of the authentic GNSS ephemeris data or the authentic GNSS almanac data by at least one of decoding the GNSS signal at the GNSS receiver or receiving the at least one of the authentic GNSS ephemeris data or the authentic GNSS almanac data via the datalink;
check authenticity of the at least one of the GNSS ephemeris data or the GNSS almanac data from each of the at least one GNSS signal by comparing the at least one of the GNSS ephemeris data or the GNSS almanac data with the at least one of the authentic GNSS ephemeris data or the authentic GNSS almanac data;
determine the set of GNSS satellites that should be currently visible to the GNSS receiver based on the current location of the GNSS receiver and the at least one of the GNSS ephemeris data or the GNSS almanac data;
determine the respective range of the expected signal strength for each of the set of GNSS satellites that should be visible; and
determine whether each respective GNSS signal of the at least one GNSS signal is spoofed by comparing the aspects of each respective GNSS signal of the at least one GNSS signal to the at least one of the set of GNSS satellites that should be visible and the respective range of the expected signal strength for each of the set of GNSS satellites that should be visible.

7. The system of claim 1, wherein the circuitry is further configured to:
provide at least one of an alarm condition, a visual indication, an audible indication, or a tactile indication when spoofing is present.

8. A method for detecting spoofing of global navigation satellite system (GNSS) signals at a GNSS receiver, comprising:
determining at least one of authentic GNSS ephemeris data or authentic GNSS almanac data by at least one of decoding a GNSS signal at the GNSS receiver or receiving the at least one of the authentic GNSS ephemeris data or the authentic GNSS almanac data via datalink;
receiving at least one GNSS signal at the GNSS receiver;
checking authenticity of the at least one of the GNSS ephemeris data or the GNSS almanac data from each of the at least one GNSS signal by comparing the at least one of the GNSS ephemeris data or the GNSS almanac data with at least one of the authentic GNSS ephemeris data or the authentic GNSS almanac data;
determining a set of GNSS satellites that should be currently visible to the GNSS receiver based on a current location of the GNSS receiver and the at least one of the GNSS ephemeris data or the GNSS almanac data;
determining a respective range of an expected signal strength for each of the set of GNSS satellites that should be visible; and
determining whether each respective GNSS signal of the at least one GNSS signal is spoofed by comparing aspects of each respective GNSS signal of the at least one GNSS signal to at least one of the set of GNSS satellites that should be visible and the respective range of the expected signal strength for each of the set of GNSS satellites that should be visible.

9. The method of claim 8, further comprising:
wherein comparing the at least one of the GNSS ephemeris data or the GNSS almanac data with the at least one of the authentic GNSS ephemeris data or the authentic GNSS almanac data comprises:
directly comparing at least a first parameter of the at least one of the GNSS ephemeris data or the GNSS almanac data with at least a second parameter of the at least one of the authentic GNSS ephemeris data or the authentic GNSS almanac data; and
wherein the set of GNSS satellites that should be currently visible to the GNSS receiver is determined at least in part by:
determining elevation angles between each GNSS satellite of the set of GNSS satellites and the GNSS receiver; and
determining that a subset of the set of GNSS satellites with elevation angles above a certain angle are visible.

10. The method of claim 8, wherein the at least one GNSS signal is received from GNSS spoofing hardware instead of from GNSS satellites.
